(19)

Europäisches
Patentamt

European
Patent Office

Office européen
des brevets

(11) **EP 4 650 662 A1**

(12) **EUROPEAN PATENT APPLICATION**

(43) Date of publication:
**19.11.2025 Bulletin 2025/47**

(51) International Patent Classification (IPC):
**F23R 3/00** (2006.01)    **G10K 11/172** (2006.01)

(21) Application number: **25174430.6**

(22) Date of filing: **06.05.2025**

(52) Cooperative Patent Classification (CPC):
**F23R 3/002; F23R 3/005; G10K 11/172;**
F23R 2900/00014

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **15.05.2024 US 202418664933**

(71) Applicant: **General Electric Company**
**Cincinnati, Ohio 45215 (US)**

(72) Inventors:
• **HAN, Fei**
  **Niskayuna, 12309 (US)**
• **MAGINA, Nicholas Arthur**
  **Niskayuna, 12309 (US)**

(74) Representative: **Openshaw & Co.**
**8 Castle Street**
**Farnham, Surrey GU9 7HR (GB)**

(54) **TURBINE ENGINE HAVING A DAMPER**

(57)    A gas turbine engine (10) having a compressor section (22) for compressing air (64) flowing therethrough to provide a compressed air flow (236), a combustor (200) including a combustion chamber (216), the combustion chamber (216) configured to combust a mixture of a fuel flow and the compressed air flow (236) to generate combustion products, a turbine section (30) having at least one turbine driven by the combustion products, and a damper (250, 300, 400, 600) in fluid communication with the combustion chamber (216) to dampen an instability generated in the combustion chamber (216) by the combustion products. The damper (250, 300, 400, 600) defined by $n_{ds} \propto n_{fp}$, $a_p \propto dp_n$, and $a_b \propto dp_v * dp_{vea}$, where $n_{ds}$ is a number of damper cavities (304, 404, 608, 612) in series, $n_{fp}$ is a number of discrete frequencies to be damped, $a_p$ is an acoustic damping potential, $dp_n$ is a neck open area ratio, $a_b$ is an acoustic damping broadness, $dp_v$ is a damper volume, and $dp_{vea}$ is a damper volume expansion angle.

FIG. 3A

EP 4 650 662 A1

# Description

## TECHNICAL FIELD

The present disclosure relates generally to a damper, for example, in a turbine engine.

## BACKGROUND

Turbine engines generally include a propulsor (e.g., a fan or a propeller) and a turbo-engine arranged in flow communication with one another. The turbo-engine includes a compressor section, a combustion section, and a turbine section. The combustion section includes a combustor for generating combustion products.

## BRIEF DESCRIPTION OF THE DRAWINGS

Features and advantages will be apparent from the following, more particular, description of various exemplary embodiments, as illustrated in the accompanying drawings, wherein like reference numbers generally indicate identical, functionally similar, and/or structurally similar elements.

FIG. 1 illustrates a schematic cross-sectional view of a turbine engine, taken along a longitudinal centerline axis of the engine, according to the present disclosure.

FIG. 2 illustrates a schematic cross-sectional view of a combustor for the turbine engine of FIG. 1, taken along a longitudinal centerline axis of the engine, according to the present disclosure.

FIG. 3A illustrates a schematic cross-sectional view of a damper for the combustor of FIG. 2, taken along a longitudinal centerline axis of the engine, according to the present disclosure.

FIG. 3B illustrates a schematic cross-sectional view of a bottom of the damper of FIG. 3A, according to the present disclosure.

FIG. 4 illustrates a schematic cross-sectional view of a damper for the combustor of FIG. 2, taken along a longitudinal centerline axis of the engine, according to the present disclosure.

FIG. 5 illustrates a graph of damper effectiveness versus frequency for the dampers of FIGS. 3A to 4, according to the present disclosure.

FIG. 6A illustrates a schematic side view of a damper for the combustor of FIG. 2, according to the present disclosure.

FIG. 6B illustrates a schematic cross-sectional view of the damper of FIG. 6A, taken along a centerline axis of the damper, according to the present disclosure.

FIG. 7 illustrates a graph of damper effectiveness versus frequency for the damper of FIGS. 6A and 6B, according to the present disclosure.

## DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first" and "second," and the like, may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or a vehicle, and refer to the normal operational attitude of the turbine engine or the vehicle. For example, with regard to a turbine engine, forward refers to a position closer to an engine inlet and aft refers to a position closer to an engine nozzle or an exhaust.

As used herein, the terms "low," "mid" (or "mid-level"), and "high," or their respective comparative degrees (e.g., "lower" and "higher", where applicable), when used with compressor, turbine, shaft, fan, or turbine engine components, each refers to relative pressures, relative speeds, relative temperatures, and/or relative power outputs within an engine unless otherwise specified. For example, a "low power" setting defines the engine configured to operate at a power output lower than a "high power" setting of the engine, and a "mid-level power" setting defines the engine configured to operate at a power output higher than a "low power" setting and lower than a "high power" setting. The terms "low," "mid" (or "mid-level"), or "high" in such aforementioned terms may additionally, or alternatively, be understood as relative to minimum allowable speeds, pressures, or temperatures, or minimum or maximum allowable speeds, pressures, or temperatures relative to normal, desired, steady state, etc., operation of the engine.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein. The terms include integral and unitary configurations (e.g., blisk rotor blade systems).

The singular forms "a," "an," and "the" include plural references unless the context clearly dictates otherwise.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

Here and throughout the specification and claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

The present disclosure provides acoustic dampers for combustion instability suppression in a combustor. When an instability is present in a combustion chamber of the combustor, the instability exhibits as a sinusoidal pressure with a significant amplitude that may damage the equipment. Acoustic dampers are employed to damp or lessen the instability. The acoustic dampers of the present disclosure combine a quarter wave tube with a Helmholtz resonator. The dampers of the present disclosure provide the ability to customize and to augment the acoustic attenuation characteristics for the specific needs of the combustion system. Changes in volume and volume expansion angle allow for the damper to capture multi-tonal behavior in the combustor and can broaden the attenuation curve significantly. Changes in the ratio of the neck opening allow for increasing the damping potential. The dampers of the present disclosure, therefore, can target and damp multiple frequencies, including targeting and damping both low and high frequency tones, in any combination, with a single damper, even if the tones are independent in frequency space. The dampers of the present disclosure assist in broadening two or more independent tones. The dampers of the present disclosure provide improvements to combustion dynamics, to engine operability, to engine durability, and, indirectly, to emissions, as compared to quarter wave tubes or Helmholtz resonators.

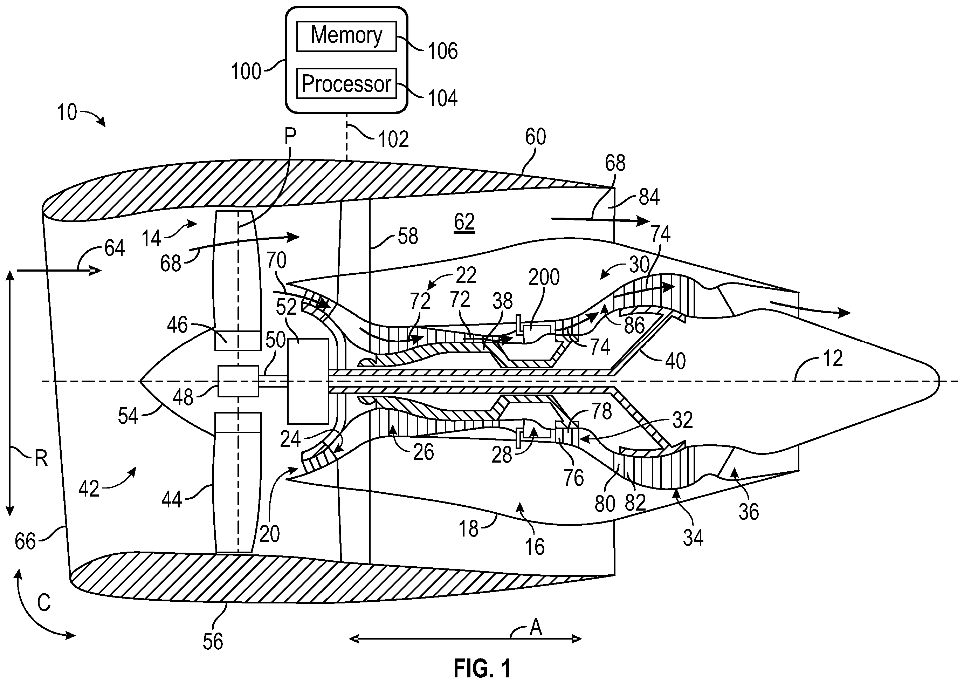

Referring now to the drawings, FIG. 1 is a schematic cross-sectional view of a turbine engine 10, taken along a longitudinal centerline axis 12 of the turbine engine 10, according to an embodiment of the present disclosure. As shown in FIG. 1, the turbine engine 10 defines an axial direction A (extending parallel to the longitudinal centerline axis 12 provided for reference), a radial direction R that is normal to the axial direction A, and a circumferential direction C extending about the longitudinal centerline axis 12. In general, the turbine engine 10 includes a fan section 14 and a turbo-engine 16 disposed downstream from the fan section 14.

The turbo-engine 16 includes, in serial flow relationship, a compressor section 22, a combustion section 28, and a turbine section 30. The turbo-engine 16 is substantially enclosed with an outer casing 18 that is substantially tubular and defines an annular inlet 20. As schematically shown in FIG. 1, the compressor section 22 includes a booster or a low-pressure (LP) compressor 24 followed downstream by a high-pressure (HP) compressor 26. The combustion section 28 includes a combustor 200 and is downstream of the compressor section 22. The turbine section 30 is downstream of the combustion section 28 and includes a high-pressure (HP) turbine 32 followed downstream by a low-pressure (LP) turbine 34. The turbo-engine 16 further includes a jet exhaust nozzle section 36 that is downstream of the turbine section 30, a high-pressure (HP) shaft 38 or a spool, and a low-pressure (LP) shaft 40. The HP shaft 38 drivingly connects the HP turbine 32 to the HP compressor 26. The HP turbine 32 and the HP compressor 26 rotate in unison through the HP shaft 38. The LP shaft 40 drivingly connects the LP turbine 34 to the LP compressor 24. The LP turbine 34 and the LP compressor 24 rotate in unison through the LP shaft 40. The compressor section 22, the combustion section 28, the turbine section 30, and the jet exhaust nozzle section 36 together define a core air flow path.

For the embodiment depicted in FIG. 1, the fan section 14 includes a fan 42 (e.g., a variable pitch fan) having a plurality of fan blades 44 coupled to a disk 46 in a spaced apart manner. As depicted in FIG. 1, the fan blades 44 extend outwardly from the disk 46 generally along the radial direction R. In the case of a variable pitch fan, the plurality of fan blades 44 are rotatable relative to the disk 46 about a pitch axis P by virtue of the fan blades 44 being operatively coupled to an actuation member 48 configured to collectively vary the pitch of the fan blades 44 in unison. The fan blades 44, the disk 46, and the actuation member 48 are together rotatable about the longitudinal centerline axis 12 via a fan shaft 50 that is powered by the LP shaft 40 across a power gearbox, also referred to as a gearbox assembly 52. In this way, the fan 42 is drivingly coupled to, and powered by, the turbo-engine 16 and the turbine engine 10 is an indirect drive engine. The gearbox assembly 52 is shown schematically in FIG. 1. The gearbox assembly 52 is a reduction gearbox assembly for adjusting the rotational speed of the fan shaft 50 and, thus, the fan 42 relative to the LP shaft 40 when power is transferred from the LP shaft 40 to the fan shaft 50.

Referring still to the exemplary embodiment of FIG. 1, the disk 46 is covered by a rotatable fan hub 54 aerodynamically contoured to promote an airflow through the plurality of fan blades 44. In addition, the fan section 14 includes an annular fan casing or a nacelle 56 that circumferentially surrounds the fan 42 and at least a portion of the turbo-engine 16 by a plurality of outlet guide vanes 58 that are circumferentially spaced about the nacelle 56 and the turbo-engine 16. Moreover, a downstream section 60 of the nacelle 56 extends over an outer portion of the turbo-engine 16, and, with the outer casing 18, defines a bypass airflow passage 62 therebetween.

During operation of the turbine engine 10, a volume of air 64 enters the turbine engine 10 through an inlet 66 of the nacelle 56 or the fan section 14. As the volume of air 64 passes across the fan blades 44, a first portion of air 68, also referred to as bypass air 68, is routed into the bypass airflow passage 62, and a second portion of air 70, also referred to as core air 70, is routed into the upstream section of the core air flow path through the annular inlet 20 of the LP compressor 24. The ratio between the bypass air 68 and the core air 70 is commonly known as a bypass ratio. The pressure of the core air 70 is then increased, generating compressed air 72. The compressed air 72 is routed through the HP compressor 26 and into the combustion section 28, wherein the compressed air 72 is mixed with fuel and ignited to generate combustion gases 74.

The combustion gases 74 are routed into the HP turbine 32 and expanded through the HP turbine 32 where a portion of thermal energy and kinetic energy from the combustion gases 74 is extracted via one or more stages of HP turbine stator vanes 76 and HP turbine rotor blades 78 that are coupled to the HP shaft 38. This causes the HP shaft 38 to rotate, thereby supporting operation of the HP compressor 26 (self-sustaining cycle). In this way, the combustion gases 74 do work on the HP turbine 32. The combustion gases 74 are then routed into the LP turbine 34 and expanded through the LP turbine 34. Here, a second portion of thermal energy and the kinetic energy is extracted from the combustion gases 74 via one or more stages of LP turbine stator vanes 80 and LP turbine rotor blades 82 that are coupled to the LP shaft 40. This causes the LP shaft 40 to rotate, thereby supporting operation of the LP compressor 24 (self-sustaining cycle) and rotation of the fan 42 via the gearbox assembly 52. In this way, the combustion gases 74 do work on the LP turbine 34.

The combustion gases 74 are subsequently routed through the jet exhaust nozzle section 36 of the turbo-engine 16 to provide propulsive thrust. Simultaneously, the bypass air 68 is routed through the bypass airflow passage 62 before being exhausted from a fan nozzle exhaust section 84 of the turbine engine 10, also providing propulsive thrust. The HP turbine 32, the LP turbine 34, and the jet exhaust nozzle section 36 at least partially define a hot gas path 86 for routing the combustion gases 74 through the turbo-engine 16.

The turbine engine 10 may be communicatively and operatively coupled to an engine controller 100 along a communication line 102. The engine controller 100 is configured to operate various aspects of the turbine engine 10. The engine controller 100 may be a Full Authority Digital Engine Control (FADEC). In this embodiment, the engine controller 100 is a computing device having one or more processors 104 and one or more memories 106. The processor 104 may be any suitable processing device, including, but not limited to, a microprocessor, a microcontroller, an integrated circuit, a logic device, a programmable logic controller (PLC), an application-specific integrated circuit (ASIC), and/or a Field Programmable Gate Array (FPGA). The memory 106 may include one or more computer-readable media, including, but not limited to, non-transitory computer-readable media, a computer-readable nonvolatile medium (e.g., a flash memory), a RAM, a ROM, hard drives, flash drives, and/or other memory devices.

The memory 106 may store information accessible by the processor 104, including computer-readable instructions that may be executed by the processor 104. The instructions may be any set of instructions or a sequence of instructions that, when executed by the processor 104, causes the processor 104 and the engine controller 100 to perform operations. In some embodiments, the instructions may be executed by the processor 104 to cause the processor 104 to complete any of the operations and functions for which the engine controller 100 is configured, as will be described further below. The instructions may be software written in any suitable programming language, or may be implemented in hardware. Additionally, and/or alternatively, the instructions may be executed in logically and/or virtually separate threads on the processor 104. The memory 106 may further store data that may be accessed by the processor 104.

The technology discussed herein makes reference to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between components and among components. For instance, processes discussed herein may be implemented using a single computing device or multiple computing devices working in combination. Databases, memory, instructions, and applications may be implemented on a single system or distributed across multiple systems. Distributed components may operate sequentially or in parallel.

The engine controller 100 may be communicatively coupled to one or more sensors employed in the methods of the present disclosure, such as, for example, vibration sensors (such as accelerometers), temperature sensors, speed sensors, and other sensors within the turbine engine 10. For example, the engine controller 100 may receive, and, optionally, store or record, data or information from the one or more sensors. The engine controller 100 may also control motoring of the turbine engine (e.g., rotation of the rotor described in more detail to follow).

The turbine engine 10 depicted in FIG. 1 is by way of example only. In other exemplary embodiments, the turbine engine 10 may have any other suitable configuration. For example, in other exemplary embodiments, the fan 42 may be configured in any other suitable manner (e.g., as a variable pitch fan or a fixed pitch fan) and further may be supported using any other suitable fan frame configuration. Moreover, in other exemplary embodiments, any other suitable number or configuration of compressors, turbines, shafts, or a combination thereof may be provided. In other exemplary embodiments, the engine may also be a direct drive engine, which does not have a power gearbox (e.g., no gearbox assembly 52). The fan speed is the same as the LP shaft speed for a direct drive engine. In still other exemplary embodiments, aspects of the present disclosure may be incorporated into any other suitable turbine engine, such as, for example, turbofan engines, propfan engines, turboprop engines, unducted engines, or turboshaft engines.

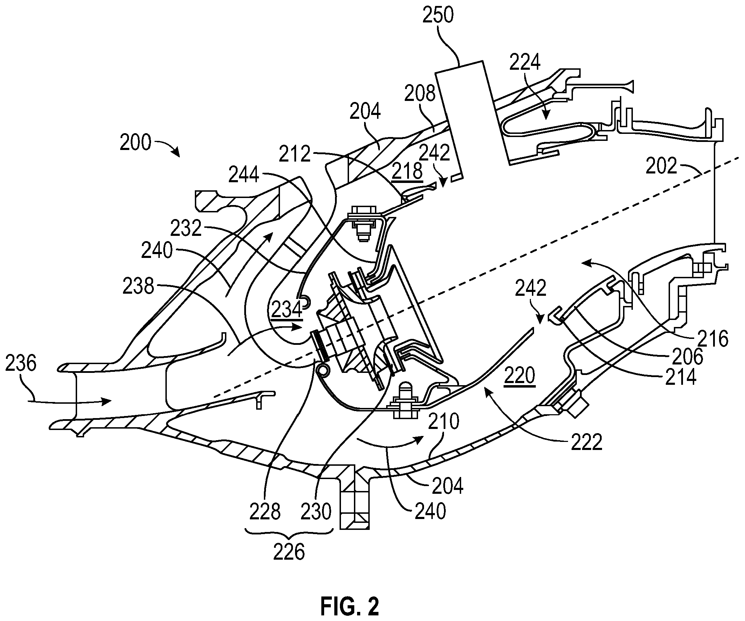

FIG. 2 illustrates a cross-sectional view of the combustor 200 taken along the longitudinal centerline axis 12 (FIG. 1). The combustor 200 has a longitudinal centerline axis 202. The combustor 200 includes a combustor casing 204 and a combustor liner 206. The combustor casing 204 has an outer casing 208 and an inner casing 210, and the combustor liner 206 has an outer liner 212 and an inner liner 214. A combustion chamber 216 is formed within the combustor liner 206. More specifically, the outer liner 212 and the inner liner 214 are disposed between the outer casing 208 and the inner casing 210. The outer liner 212 and the inner liner 214 are spaced radially from each other such that the combustion chamber 216 is defined therebetween. The outer casing 208 and the outer liner 212 form an outer passage 218 therebetween, and the inner casing 210 and the inner liner 214 form an inner passage 220 therebetween. As illustrated, the combustor 200 is a single annular combustor, but, in other embodiments, the combustor 200 may be any other combustor.

The combustion chamber 216 has a forward end 222 (upstream end) and an aft end 224 (downstream end). A swirler/fuel nozzle assembly 226 is positioned at the forward end 222 of the combustion chamber 216. The swirler/fuel nozzle assembly 226 includes a fuel nozzle 228 and a swirler 230. In the example of an annular combustor, such as combustor 200, the swirler/fuel nozzle assembly 226 may be one of a plurality of swirler/fuel nozzle assemblies 226 arranged in an annular configuration in the circumferential direction around the longitudinal centerline axis 12 (FIG. 1).

As discussed above, and with reference to FIGS. 1 and 2, the compressor section 22, the combustion section 28 (including the combustor 200), and the turbine section 30 form, at least in part, a flow path for the core air 70. The core air 70 entering the annular inlet 20 is compressed by the LP compressor 24 and the HP compressor 26, and flows to the combustor 200 as a compressed air flow 236. A cowl assembly 232 is coupled to upstream ends of the outer liner 212 and the inner liner 214, respectively. An annular opening 234 formed in the cowl assembly 232 enables a first portion 238 of the compressed air flow 236 to enter the combustor 200. The first portion 238 flows through the annular opening 234 to support combustion within the combustion chamber 216. A second portion 240 of the compressed air flow 236 flows around the outside of the combustor liner 206 through the outer passage 218 and the inner passage 220. The second portion 240 may be introduced into the combustion chamber 216 through a plurality of circumferentially spaced dilution holes 242 formed in the combustor liner 206 at one or more positions downstream of the swirler/fuel nozzle assembly 226. Although a single dilution hole 242 is shown in each of the outer liner 212 and the inner liner 214, a plurality of dilution holes 242 may be provided in a circumferential direction about the longitudinal centerline axis 202. Furthermore, the dilution holes 242 may be provided in the outer liner 212 or the inner liner 214, or both the outer liner 212 and the inner liner 214.

Each swirler/fuel nozzle assembly 226 of the plurality of swirler/fuel nozzle assemblies 226 is coupled to a dome plate 244. Each swirler/fuel nozzle assembly 226 receives the first portion 238 of the compressed air flow 236 from the annular opening 234. The swirler 230 of the swirler/fuel nozzle assembly 226 generates turbulence in the first portion 238. The fuel nozzle 228 injects fuel into the turbulent air flow and the turbulence promotes rapid mixing of the fuel with the air. The resulting mixture of the fuel and the compressed air is discharged into the combustion chamber 216, and is combusted in the combustion chamber 216, generating combustion gases (combustion products), which accelerate as the combustion gases leave the combustion chamber 216. A damper 250, as described in more detail to follow, is provided within the combustor 200.

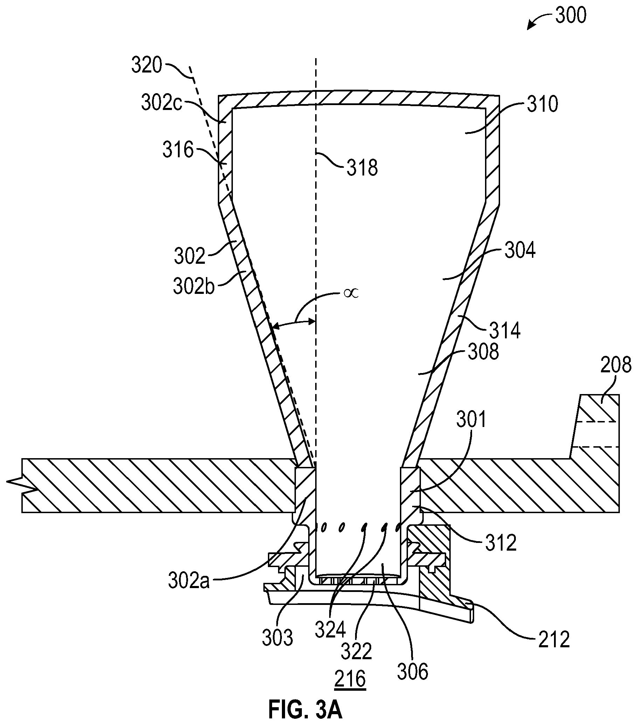

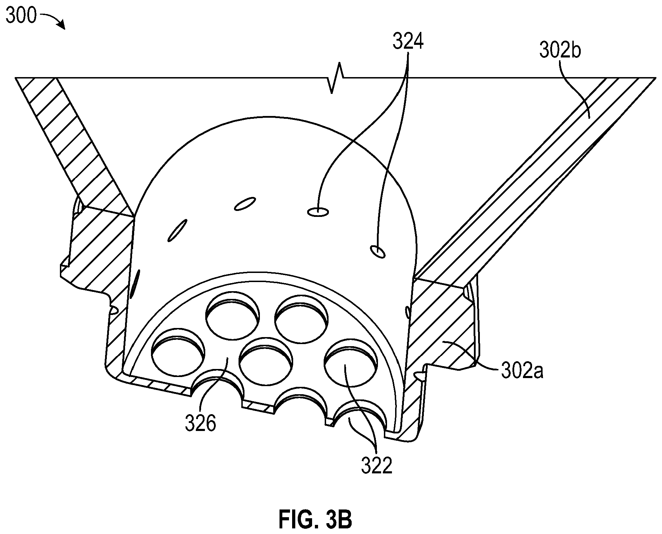

FIGS. 3A and 3B illustrate a damper 300, which may be the damper 250 (FIG. 2) of the combustor 200. The damper 300 extends through an opening 301 in the outer casing 208 and an opening 303 in the outer liner 212 of the combustor 200. Although illustrated extending through the opening 301 of the outer casing 208, in some examples, the damper 300 may be fully within the outer casing 208, such that the damper 300 extends only through the opening 303 through the outer liner 212, but not through the outer casing 208. The damper 300 may be an acoustic damper. A single damper 300 is illustrated in FIG. 2. The damper 300 may, however, include a plurality of dampers distributed circumferentially around the combustor 200. Each damper 300 provided extends through a single opening (e.g., the opening 303) in the outer liner 212 such that the damper 300 communicates with the combustion chamber 216 through the single opening 303. As described in more detail to follow, this allows for the multi-tonal and the broad frequency damping with a single damper and a single opening in the outer liner 212.

FIGS. 3A and 3B illustrate the damper 300 in more detail. The damper 300 includes a damper body 302 having a first damper body portion 302a, a second damper body portion 302b, and a third damper body portion 302c. In some examples, the damper body 302 is a unitary, single piece body. The damper 300 includes a damper cavity 304 within the damper body 302. The damper cavity 304 has a varying interior volume that is defined by a first cavity volume 306, defined by the first damper body portion 302a, a second cavity volume 308, defined by the second damper body portion 302b, and a third cavity volume 310, defined by the third damper body portion 302c. As illustrated in FIG. 3A, the damper cavity 304 is a single volume having various cross sections and shapes as defined by the first cavity volume 306, the second cavity volume 308, and the third cavity volume 310.

The damper cavity 304 is in fluid communication with the combustion chamber 216 (FIG. 2) through one or more openings 322, also referred to herein as one or more damper necks 322, formed in an orifice plate 326. The one or more openings 322 function as the neck of the Helmholtz resonator. The damper cavity 304 is in fluid communication with the outer passage 218 (FIG. 1) with one or more openings 324.

The first damper body portion 302a has a first damper wall 312 that is generally cylindrical in shape such that the first cavity volume 306 is cylindrical. The second damper body portion 302b has a second damper wall 314 that is generally frustoconical in shape such that the second cavity volume 308 is frustoconical. In the radial direction extending outward from the combustor 200, the second damper wall 314 gradually expands from the first damper body portion 302a to the third damper body portion 302c such that the second cavity volume 308 gradually expands in cross section and volume from the first cavity volume 306 to the third cavity volume 310. The third damper body portion 302c has a third damper wall 316 that is generally cylindrical in shape such that the third cavity volume 310 is cylindrical.

A first damper wall axis 318 is parallel to an internal surface of the first damper wall 312. A second damper wall axis 320 is parallel to an inner surface of the second damper wall 314. A damper volume expansion angle alpha $\alpha$ is defined between the first damper wall axis 318 and the second damper wall axis 320.

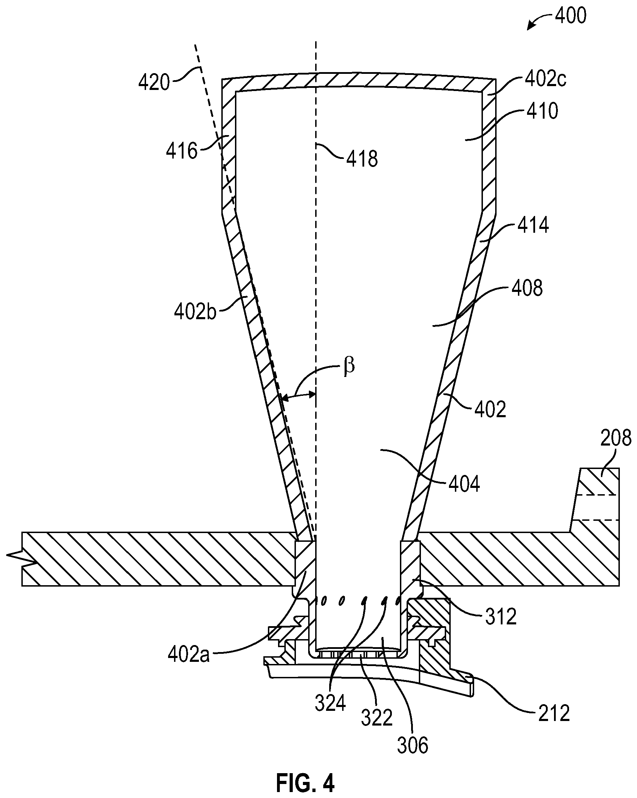

FIG. 4 illustrates a damper 400, which may be the damper 250 (FIG. 2) of the combustor 200. The damper 400 is the same as the damper 300, except for the proportion of the damper body, as described in more detail below. Accordingly, like numbers represent like parts as described with respect to the damper 300 (FIG. 3), and the alternatives and function of the damper 300 applies to the damper 400.

The damper 400 includes a damper body 402 having a first damper body portion 402a, a second damper body portion 402b, and a third damper body portion 402c. In some examples, the damper body 402 is a unitary, single piece body. The damper 400 includes a damper cavity 404 within the damper body 402. The damper cavity 404 has a varying interior volume that is defined by a first cavity volume 306, defined by the first damper body portion 402a, a second cavity volume 408, defined by the second damper body portion 402b, and a third cavity volume 410, defined by the third damper body portion 402c. As illustrated in FIG. 4, the damper cavity 404 is a single volume having various cross sections and shapes as defined by the first cavity volume 306, the second cavity volume 408, and the third cavity volume 410. The damper cavity 404 is in fluid communication with the combustion chamber 216 (FIG. 2) through the one or more openings 322 and is in fluid communication with the outer passage 218 (FIG. 1) with the one or more openings 324.

The first damper body portion 402a has the first damper wall 312 that is generally cylindrical in shape such that the first cavity volume 306 is cylindrical. The second damper body portion 402b has a second damper wall 414 that is generally frustoconical in shape such that the second cavity volume 408 is frustoconical. In the radial direction extending outward from the combustor 200, the second damper wall 414 gradually expands from the first damper body portion 402a to the third damper body portion 402c such that the second cavity volume 408 gradually expands in cross section and volume from the first cavity volume 306 to the third cavity volume 310. The third damper body portion 402c has a third damper wall 416 that is generally cylindrical in shape such that the third cavity volume 410 is cylindrical.

A first damper wall axis 418 is parallel to an internal surface of the first damper wall 312. A second damper wall axis 420 is parallel to an inner surface of the second damper wall 414. A damper volume expansion angle beta $\beta$ is defined between the first damper wall axis 418 and the second damper wall axis 420.

The damper 300 and the damper 400 each combines a quarter wave tube with a Helmholtz resonator. The first damper body portion 302a, 402a is a quarter wave tube. The second damper body portion 302b, 402b and the third damper body portion 302c, 402c are, together, a Helmholtz resonator. The openings 322 represent the neck of the Helmholtz resonator.

When an instability is present in the combustion chamber 216 (FIG. 2), the instability exhibits as a sinusoidal pressure with a large amplitude that may damage the equipment. The dampers 300, 400 dampen or lessen the instability. The dampers 300, 400 provide the ability to customize and to augment the acoustic attenuation characteristics within the combustion chamber 216. The dampers 300, 400 allow for the damper to capture multi-tonal behavior in the combustion chamber 216 and to broaden the attenuation curve.

Comparing the aspect of FIG. 3 to the aspect of FIG. 4, the second damper portion 402b has a lesser damper volume expansion angle beta $\beta$ than the damper volume expansion angle alpha $\alpha$ of the second damper portion 302b. The lesser angle results in a smaller cross section to the second cavity volume 408 (as compared to the second cavity volume 308). The second damper wall 414, thus, is longer in length than the second damper wall 314. The damper 400 is smaller in the radial direction (with respect to a centerline of the damper) and longer in the longitudinal direction (e.g., parallel to the centerline of the damper) as compared to the damper 300. Accordingly, the damper volume expansion angle affects the volume of the damper.

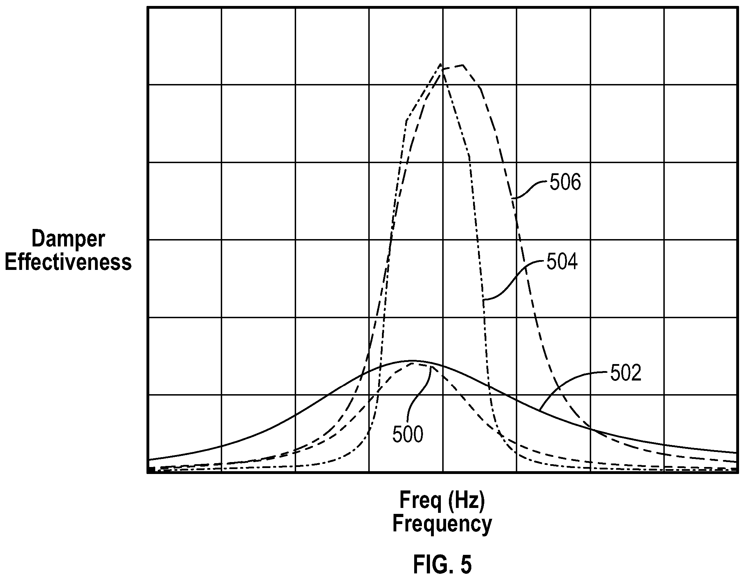

FIG. 5 shows an exemplary graph illustrating the effect of the variable cross section dampers. The curve 500 illustrates damper effectiveness for a damper with a single, constant volume, such as a quarter wave tube. The curve 500 represents a baseline damper effectiveness, which is compared to the dampers of curves 502, 504, and 506.

The curve 502 illustrates damper effectiveness for a damper having a single, constant volume, such as a quarter wave tube, that is of a greater volume than that of the damper of the curve 500. The greater volume is achieved by increasing the damper volume expansion angle (e.g., damper volume expansion angle α in FIG. 3A and damper volume expansion angle β in FIG. 4).

The curve 504 illustrates damper effectiveness for a damper having the same volume as that of the damper of the curve 500, with a change in the damper neck (e.g., a change in the diameter of the one or more openings 322 in FIG. 3B), as compared to the damper of the curve 500.

The curve 506 illustrates damper effectiveness for a damper having a greater volume than the damper of the curve 500 (e.g., by increasing the damper volume expansion angle) and a change in the damper neck (e.g., a change in the diameter of the one or more openings 322), as compared to the damper of the curve 500. The curve 506 changes the expansion angle to the same expansion angle as the damper of the curve 502 and changes the damper neck to the same size as the damper of the curve 504.

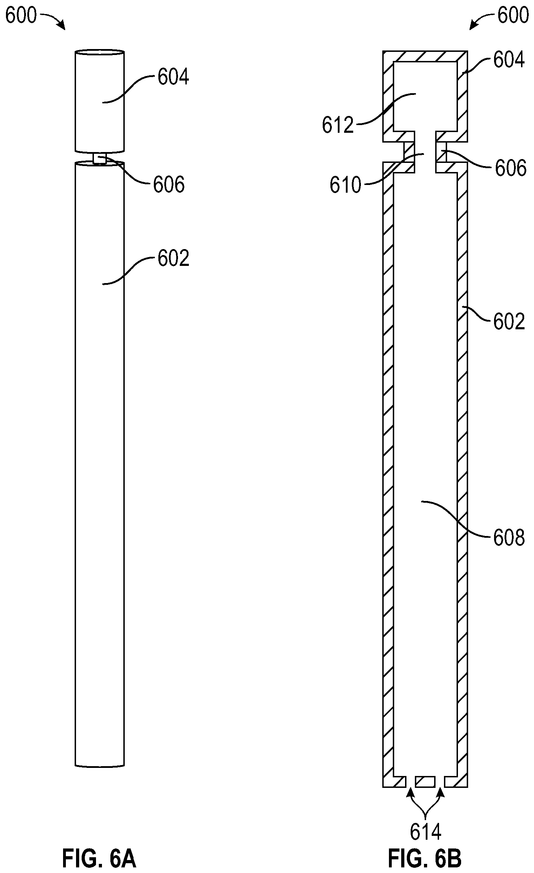

FIG. 6 illustrates a damper 600 having serial damper cavities. That is, the damper 600 has a first damper body 602 and a second damper body 604. The first damper body 602 is connected to the second damper body 604 with a third damper body 606. The first damper body 602 has a first damper cavity 608 and the second damper body 604 has a second damper cavity 612. The third damper body 606 has a third damper cavity 610, which connects the first damper cavity 608 to the second damper cavity 612. The first damper cavity 608, and, thus, also the second damper cavity 612, is in fluid communication with the combustion chamber 216 (FIG. 2) through one or more openings 614, which operate as the neck of the damper 600.

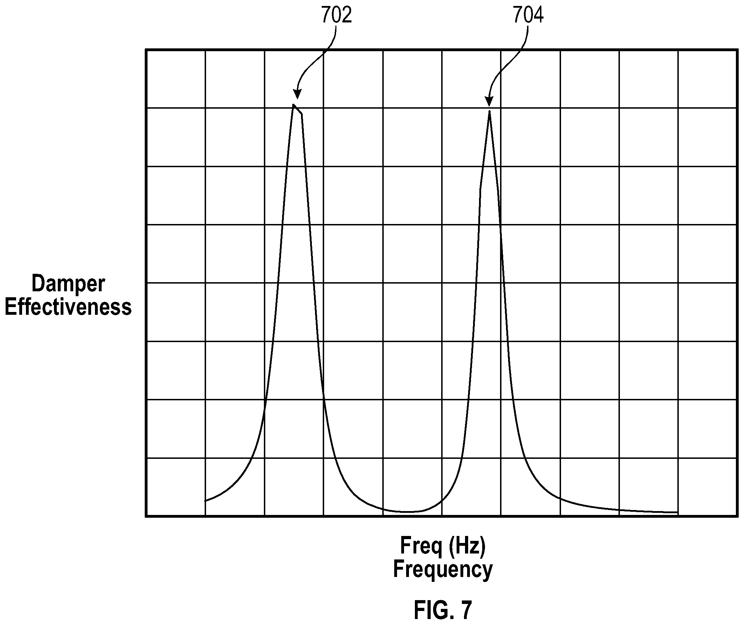

FIG. 7 shows an exemplary graph illustrating the effect of the serial damper cavities. The curve includes two peaks, a first peak 702 and a second peak 704. Each peak illustrates a frequency that is damped by one of the damper cavities. For example, the first damper cavity 608 damps the frequency aligned with the first peak 702 and the second damper cavity 612 damps the frequency aligned with the second peak 704.

The dampers of the present disclosure illustrate that there is a direct proportional relationship between the number of cavities in series and the number of discrete frequencies (also referred to as tones) that are attenuated or damped. This can be effectively written as:

$$n_{ds} \propto n_{fp}$$

where $n_{ds}$ is the number of damper cavities in series and $n_{fp}$ is the number of discrete frequencies (tones) that are attenuated or damped. The damper cavities $n_{ds}$ can be from one volume to four volumes and, thus, the targeted frequencies $n_{fp}$ can also be from one frequency to four frequencies. In one example, the damper cavities $n_{ds}$ can be from one volume to two volumes and, thus, the targeted frequencies $n_{fp}$ can also be from one frequency to two frequencies.

Furthermore, there is a direct proportional relationship between the acoustic damping potential, also referred to as the growth rate reduction or acoustic attenuation potential and the neck open area ratio. This can be effectively written as:

$$a_p \propto dp_n$$

where $a_p$ is the acoustic damping potential (i.e., potential growth rate reduction or acoustic attenuation, at each frequency) and $dp_n$ is the damper parameter of the neck open area ratio. Referring briefly to FIG. 3B, the neck open area ratio represents the ratio of the total area of the damper necks 322 to the total area of the orifice plate 326 (inclusive of the damper neck 322 area, that is, both the area of the plate and the area of the openings). The acoustic damping potential $a_p$ can be from zero rad/sec to one thousand rad/sec and the neck open area ratio $dp_n$ can be from 0 to 1. In an example, the acoustic damping potential $a_p$ can be from zero rad/sec to two hundred fifty rad/sec. In an example, the neck open area ratio $dp_n$ can be from 0.1 to 1.

Additionally, there is a direct proportional relationship between the acoustic damping broadness and the product of the damper volume and the damper volume expansion angle. This can be effectively written as:

$$a_b \propto dp_v * dp_{vea}$$

where $a_b$ is the acoustic damping broadness (i.e., the breadth of the frequency range that the dampers are effective over), $dp_v$ is the damper parameter of the damper volume, and $dp_{vea}$ is the damper parameter of the damper volume expansion angle. The acoustic damping potential $a_b$ can be from zero Hertz to five thousand Hertz. The damper volume can be from 0.05 $in^3$ to 50 $in^3$. The damper volume expansion angle $dp_{vea}$ can be from zero degrees to ninety degrees. In an example, the acoustic damping potential $a_b$ can be from zero Hertz to five hundred Hertz. In an example, the acoustic damping potential $a_b$ can be from zero Hertz to fifty Hertz. In an example, the damper volume expansion angle $dp_{vea}$ can be from zero degrees to thirty degrees. All three of the aforementioned relationships contribute to the effectiveness of the dampers and are employed to form a damper that provides the desired damping magnitude and broadening. When designing the damper, the damper size must also be considered in conjunction with the aforementioned relationships. In some examples, the width of the damper is limited. For example, if the width of the damper is too large, the damper may interfere with other components of the turbine engine. Therefore, the tradeoffs of acoustic performance and impact to surrounding hardware are also considered to optimize the performance given geometric constraints.

Referring back to FIG. 5, the x-axis illustrates how broad of a frequency (e.g., $a_b$) over which the damper provides effectiveness. For example, the more frequencies covered by the curve, the broader the damping. The y-axis illustrates the damping potential (e.g., $a_p$) of the damper. For example, the higher the curve along the y-axis, the greater the damping potential. As illustrated in FIG. 5, the damper volume expansion angle $dp_{vea}$ and the damper volume $dp_v$ have a direct effect on the broadening of the dampening (e.g., comparing the broadness of the curve 502 to the broadness of the curve 500). The neck open area ratio (e.g., $dp_n$) has a direct effect on the damping potential (e.g., comparing the amplitude of the curve 504 to the amplitude of the curve 500). By adjusting all three parameters (e.g., $dp_{vea}$, $d_{pv}$, and $dp_n$), as illustrated in the curve 506, both the amplitude and broadness of the damper are improved (as compared to the curve 500).

Accordingly, the dampers of the present disclosure provide acoustic damper performance that is improved by having two or more dampers in series, a damper being a design that combines a quarter wave tube design with a Helmholtz resonator design, or a combination thereof. The dampers of the present disclosure, therefore, improve damping effect across a wide frequency range.

Further aspects are provided by the subject matter of the following clauses.

A gas turbine engine comprising a compressor section for compressing air flowing therethrough to provide a compressed air flow, a combustor including a combustion chamber that is configured to combust a mixture of a fuel flow and the compressed air flow to generate combustion products, a turbine section having at least one turbine driven by the combustion products, and a damper in fluid communication with the combustion chamber to dampen an instability generated in the combustion chamber by the combustion products, the damper defined by $n_{ds} \propto n_{fp}$; $a_p \propto dp_n$; and $a_b \propto dp_v * dp_{vea}$, where $n_{ds}$ is a number of damper cavities in series, $n_{fp}$ is a number of discrete frequencies to be damped, $a_p$ is an acoustic damping potential, $dp_n$ is a neck open area ratio, $a_b$ is an acoustic damping broadness, $dp_v$ is a damper volume, and $dp_{vea}$ is a damper volume expansion angle.

The gas turbine engine of the preceding clause, wherein the damper has a damper body that is at least partially conical.

The gas turbine engine any preceding clause, wherein the damper includes a single damper volume.

The gas turbine engine any preceding clause, wherein the damper includes a plurality of damper volumes fluidly coupled together in series.

The gas turbine engine any preceding clause, wherein the neck open area ratio is a ratio of a total area of a damper neck to a total area of an orifice plate, including the area of the damper neck.

The gas turbine engine any preceding clause, wherein the damper volume is from 0.05 in$^3$ to 50 in$^3$.

The gas turbine engine any preceding clause, wherein the neck open area ratio is from 0.01 to one.

The gas turbine engine any preceding clause, wherein the number of damper cavities in series is from one volume to four volumes.

The gas turbine engine any preceding clause, wherein the number of damper cavities is from one volume to two volumes.

The gas turbine engine any preceding clause, wherein the number of discrete frequencies to be damped is from one frequency to four frequencies.

The gas turbine engine any preceding clause, wherein the number of discrete frequencies to be damped is from one frequency to two frequencies.

The gas turbine engine any preceding clause, wherein the acoustic damping potential is from zero rad/sec to one thousand rad/sec.

The gas turbine engine any preceding clause, wherein the acoustic damping potential is from zero rad/sec to two hundred fifty rad/sec.

The gas turbine engine any preceding clause, wherein the acoustic damping broadness is from zero Hertz to five thousand Hertz.

The gas turbine engine any preceding clause, wherein the acoustic damping broadness is from zero Hertz to fifty Hertz.

The gas turbine engine any preceding clause, wherein the damper volume expansion angle is from zero degrees to ninety degrees.

The gas turbine engine any preceding clause, wherein the damper volume expansion angle is from zero degrees to thirty degrees.

The gas turbine engine any preceding clause, wherein the damper is coupled to an outer liner of the combustor through a single opening in the outer liner.

The gas turbine engine any preceding clause, wherein the damper is one of a plurality of dampers disposed circumferentially about the combustor.

The gas turbine engine any preceding clause, wherein each of the plurality of dampers is the same.

The gas turbine engine of any preceding clause, wherein each damper volume of the plurality of damper volumes targets a different frequency to be damped.

The gas turbine engine of any preceding clause, wherein the combustor is defined by a combustion liner, the gas turbine engine further comprising an outer casing surrounding the combustion liner.

The gas turbine engine of any preceding clause, wherein each of the combustion liner and the casing comprise an opening therethrough and the damper extends through the openings in each of the combustion liner and the casing.

The gas turbine engine of any preceding clause, wherein the combustion liner comprises an opening therethrough and the damper is fully within the outer casing such that the damper extends only through the opening of the combustion liner, but not through the outer casing.

The gas turbine engine of any preceding clause, wherein the damper extends through a single opening in the combustion liner.

A gas turbine engine comprising a compressor section for compressing air flowing therethrough to provide a compressed air flow, a combustor including a combustion chamber, the combustion chamber configured to combust a mixture of a fuel flow and the compressed air flow to generate combustion products, a turbine section having at least one turbine driven by the combustion products, and a damper in fluid communication with the combustion chamber to dampen an instability generated in the combustion chamber by the combustion products, the damper defined by $n_{ds} \propto n_{fp}$, where $n_{ds}$ is a number of damper cavities in series and $n_{fp}$ is a number of discrete frequencies to be damped.

The gas turbine engine of any preceding clause, the damper further defined by $a_p \propto dp_n$, where $a_p$ is an acoustic damping potential and $dp_n$ is a neck open area ratio.

The gas turbine engine of any preceding clause, the damper further defined by $a_b \propto dp_v * dp_{vea}$, where $a_b$ is an acoustic damping broadness, $dp_v$ is a damper volume, and $dp_{vea}$ is a damper volume expansion angle.

A gas turbine engine comprising a compressor section for compressing air flowing therethrough to provide a compressed air flow, a combustor including a combustion chamber, the combustion chamber configured to combust a mixture of a fuel flow and the compressed air flow to generate combustion products, a turbine section having at least one turbine driven by the combustion products, and a damper in fluid communication with the combustion chamber to dampen an instability generated in the combustion chamber by the combustion products, the damper defined by $a_p \propto dp_n$, where $a_p$ is an acoustic damping potential and $dp_n$ is a neck open area ratio.

The gas turbine engine of any preceding clause, the damper further defined by $a_b \propto dp_v * dp_{vea}$, where $a_b$ is an acoustic damping broadness, $dp_v$ is a damper volume, and $dp_{vea}$ is a damper volume expansion angle.

The gas turbine engine of any preceding clause, the damper further defined by $n_{ds} \propto n_{fp}$, where $n_{ds}$ is a number of damper cavities in series and $n_{fp}$ is a number of discrete frequencies to be damped.

A gas turbine engine comprising a compressor section for compressing air flowing therethrough to provide a compressed air flow, a combustor including a combustion chamber, the combustion chamber configured to combust a mixture of a fuel flow and the compressed air flow to generate combustion products, a turbine section having at least one turbine driven by the combustion products, and a damper in fluid communication with the combustion chamber to dampen an instability generated in the combustion chamber by the combustion products, the damper defined by $a_b \propto dp_n * dp_{vea}$, where $a_b$ is an acoustic damping broadness, $dp_v$ is a damper volume, and $dp_{vea}$ is a damper volume expansion angle.

The gas turbine engine of any preceding clause, the damper further defined by $a_p \propto dp_n$, where $a_p$ is an acoustic damping potential and $dp_n$ is a neck open area ratio.

The gas turbine engine of any preceding clause, the damper further defined by $n_{ds} \propto n_{fp}$, where $n_{ds}$ is a number of damper cavities in series and $n_{fp}$ is a number of discrete frequencies to be damped.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. A gas turbine engine (10) comprising:

> a compressor section (22) for compressing air (64) flowing therethrough to provide a compressed air flow (236);
> a combustor (200) including a combustion chamber (216) that is configured to combust a mixture of a fuel flow and the compressed air flow (236) to generate combustion products;
> a turbine section (30) having at least one turbine driven by the combustion products; and
> a damper (250, 300, 400, 600) in fluid communication with the combustion chamber (216) to dampen an instability generated in the combustion chamber (216) by the combustion products, the damper (250, 300, 400, 600) defined by:

$$n_{ds} \propto n_{fp};$$

$$a_p \propto dp_n;$$

> and

$$a_b \propto dp_v * dp_{vea},$$

where $n_{ds}$ is a number of damper cavities (304, 404, 608, 612) in series, $n_{fp}$ is a number of discrete frequencies to be damped, $a_p$ is an acoustic damping potential, $dp_n$ is a neck open area ratio, $a_b$ is an acoustic damping broadness, $dp_v$ is a damper volume, and $dp_{vea}$ is a damper volume expansion angle.

2. The gas turbine engine (10) of claim 1, wherein the damper (250, 300, 400, 600) has a damper body (302, 402) that is at least partially conical.

3. The gas turbine engine (10) of any preceding claim, wherein the damper (250, 300, 400) includes a single damper volume.

4. The gas turbine engine (10) of claim 1, wherein the damper (250, 600) includes a plurality of damper volumes fluidly coupled together in series.

5. The gas turbine engine (10) of any preceding claim, wherein the neck open area ratio is a ratio of a total area of a damper neck (322, 614) to a total area of an orifice plate (326), including the area of the damper neck.

6. The gas turbine engine (10) of any preceding claim, wherein the damper volume is from 0.05 in$^3$ to 50 in$^3$.

7. The gas turbine engine (10) of any preceding claim, wherein the neck open area ratio is from 0.01 to one.

8. The gas turbine engine (10) of any preceding claim, wherein the number of damper cavities (304, 404, 608, 612) in series is from one volume to four volumes, and optionally, from one volume to two volumes.

9. The gas turbine engine (10) of any preceding claim, wherein the number of discrete frequencies to be damped is from one frequency to four frequencies, and optionally, from one frequency to two frequencies.

10. The gas turbine engine (10) of any preceding claim, wherein the acoustic damping potential is from zero rad/sec to one thousand rad/sec, and optionally, from zero rad/sec to two hundred fifty rad/sec.

11. The gas turbine engine (10) of any preceding claim, wherein the acoustic damping broadness is from zero Hertz to five thousand Hertz, and optionally, from zero Hertz to fifty Hertz.

12. The gas turbine engine (10) of any preceding claim, wherein the damper volume expansion angle is from zero degrees to ninety degrees, and optionally, from zero degrees to thirty degrees.

13. The gas turbine engine (10) of any preceding claim, wherein the damper (250, 300, 400, 600) is coupled to an outer liner (212) of the combustor (200) through a single opening in the outer liner (212).

14. The gas turbine engine (10) of claim 13, wherein the damper (250, 300, 400, 600) is one of a plurality of dampers (250, 300, 400, 600) disposed circumferentially about the combustor (200).

15. The gas turbine engine (10) of claim 14, wherein each of the plurality of dampers (250, 300, 400, 600) is the same.

FIG. 1

FIG. 2

EP 4 650 662 A1

FIG. 3A

**FIG. 3B**

**FIG. 4**

Damper Effectiveness

506

504

502

500

Freq (Hz)
Frequency

FIG. 5

600

604

606

602

**FIG. 6A**

600

604

612

606

610

602

608

614

**FIG. 6B**

FIG. 7

EP 4 650 662 A1

## EUROPEAN SEARCH REPORT

**Application Number**

EP 25 17 4430

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/075168 A1 (DE JONGE JEFFREY [CH] ET AL) 19 March 2015 (2015-03-19)<br>* paragraphs [0012], [0033] - paragraph [0059]; figures 1-3 *<br>* paragraph [0060] - paragraph [0072]; figures 4-6 * | 1-13 | INV.<br>F23R3/00<br>G10K11/172 |
| X | WO 2019/027508 A1 (SIEMENS AG [DE]) 7 February 2019 (2019-02-07)<br>* paragraphs [0031], [0042] - paragraph [0045]; figures 4,5 * | 1,3-11, 13 | |
| X | EP 2 860 449 A1 (ALSTOM TECHNOLOGY LTD [CH]) 15 April 2015 (2015-04-15)<br><br>* paragraphs [0007], [0025], [0029], [0033], [0041]; figures 4,8 * | 1,3-5, 7-11, 13-15 | |
| X | US 2012/102963 A1 (CORR ROBERT [US] ET AL) 3 May 2012 (2012-05-03)<br>* paragraph [0019] - paragraph [0022]; figures 3A,B,4A * | 1,3,5, 10,13-15 | |
| A | VALIÈRE JEAN-CHRISTOPHE ET AL: "Dependence of the internal geometry for the calculation of the Helmholtz frequency in an axisymmetrical acoustic resonator", THE JOURNAL OF THE ACOUSTICAL SOCIETY OF AMERICA, AMERICAN INSTITUTE OF PHYSICS, 2 HUNTINGTON QUADRANGLE, MELVILLE, NY 11747, vol. 150, no. 6, 2 December 2021 (2021-12-02), pages 4053-4063, XP012261651, ISSN: 0001-4966, DOI: 10.1121/10.0007461 [retrieved on 2021-12-02]<br>* page 4057 - page 4058; figures 5,6 * | 1-15 | TECHNICAL FIELDS SEARCHED (IPC)<br><br>F23R<br>G10K |

The present search report has been drawn up for all claims

| Place of search | Date of completion of the search | Examiner |
|---|---|---|
| The Hague | 30 July 2025 | Mootz, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 17 4430

This annex lists the patent family members relating to the patent documents cited in the above-mentioned European search report.
The members are as contained in the European Patent Office EDP file on
The European Patent Office is in no way liable for these particulars which are merely given for the purpose of information.

30-07-2025

| Patent document cited in search report | | Publication date | Patent family member(s) | | Publication date |
|---|---|---|---|---|---|
| US 2015075168 | A1 | 19-03-2015 | CN | 104204677 A | 10-12-2014 |
| | | | EP | 2831504 A1 | 04-02-2015 |
| | | | JP | 6138232 B2 | 31-05-2017 |
| | | | JP | 2015514180 A | 18-05-2015 |
| | | | RU | 2014143769 A | 27-05-2016 |
| | | | US | 2015075168 A1 | 19-03-2015 |
| | | | WO | 2013144070 A1 | 03-10-2013 |
| WO 2019027508 | A1 | 07-02-2019 | WO | 2018144064 A1 | 09-08-2018 |
| | | | WO | 2018144065 A1 | 09-08-2018 |
| | | | WO | 2019027508 A1 | 07-02-2019 |
| EP 2860449 | A1 | 15-04-2015 | CN | 104566455 A | 29-04-2015 |
| | | | EP | 2860449 A1 | 15-04-2015 |
| | | | JP | 2015075116 A | 20-04-2015 |
| | | | US | 2015096829 A1 | 09-04-2015 |
| US 2012102963 | A1 | 03-05-2012 | CN | 103189619 A | 03-07-2013 |
| | | | DE | 112011103621 T5 | 01-08-2013 |
| | | | RU | 2013124821 A | 10-12-2014 |
| | | | US | 2012102963 A1 | 03-05-2012 |
| | | | WO | 2012057994 A2 | 03-05-2012 |

EPO FORM P0459

For more details about this annex : see Official Journal of the European Patent Office, No. 12/82